# EUROPEAN PATENT APPLICATION

(11) **EP 4 790 039 A1**
(43) Date of publication of application: **12.08.2026**
(21) Application number: 24874757.8
(22) Date of filing: 04.10.2024
(51) Int. Cl.: C04B 35/58

(54) **CERAMIC SINTERED BODY**

(30) Priority: 04.10.2023 JP 2023172914
(71) Applicant: Nippon Steel Corporation, Tokyo 100-8071 (JP)
(72) Inventor: NAKAMORI, Hiroki, Tokyo 100-8071 (JP); NARIKI, Shinya, Tokyo 100-8071 (JP); NAKABAYASHI, Masashi, Tokyo 100-8071 (JP)
(74) Representative: Vossius & Partner Patentanwälte Rechtsanwälte mbB
(86) International application number: PCT/JP2024/035641
(87) International publication number: WO 2025/075157

(57) **Abstract**

The present application discloses a ceramic sintered body in which both toughness and wear resistance are satisfied. The ceramic sintered body of the present disclosure contains a first compound and a second compound. The first compound is silicon carbide, and the second compound is a diboride of a Group 4 element. A ratio of the second compound in the ceramic sintered body is 50% by mass or more and 70% by mass or less. When a 300 µm × 300 µm region of a polished surface of the ceramic sintered body is divided into 400 sections of 15 µm × 15 µm and an area ratio of the first compound is specified for each of the sections, a coefficient of variation CV of the area ratio of the first compound is more than 0.14 and less than 0.23.

## Description

### FIELD

The present application discloses a ceramic sintered body.

### BACKGROUND

Ceramic sintered bodies are used as various structural materials. In some cases, high toughness is required for such ceramic sintered bodies. As methods of improving the toughness of a ceramic sintered body, there are known methods of mixing two phases that are different in thermal expansion coefficient to generate a residual stress and thereby inhibit the propagation of cracks (e.g., PTLs 1 and 2).

### CITATION LIST

### PATENT LITERATURE

PTL 1: Japanese Unexamined Patent Publication (Kokai) No. 2016-132607
PTL 2: Japanese Unexamined Patent Publication (Kokai) No. 2005-035803

### SUMMARY

### TECHNICAL PROBLEM

Conventional ceramic sintered bodies have room for improvement in terms of both toughness and wear resistance.

### SOLUTION TO PROBLEM

The present application discloses the following aspects as means for solving the above-described problem.

### <Aspect 1>

A ceramic sintered body, containing a first compound and a second compound,
wherein
the first compound is silicon carbide,
the second compound is a diboride of a Group 4 element,
a ratio of the second compound in the ceramic sintered body is 50% by mass or more and 70% by mass or less, and
when a 300 µm × 300 µm region of a polished surface of the ceramic sintered body is divided into 400 sections of 15 µm × 15 µm and an area ratio of the first compound is specified for each of the sections, a coefficient of variation CV of the area ratio of the first compound is more than 0.14 and less than 0.23.

### <Aspect 2>

The ceramic sintered body according to Aspect 1, wherein
the second compound is represented by Ti₁₋ₓZrₓB₂ (0 ≤ x ≤ 0.05).

### <Aspect 3>

The ceramic sintered body according to Aspect 1 or 2, wherein
the coefficient of variation CV is 0.15 or more and 0.20 or less.

### <Aspect 4>

The ceramic sintered body according to any one of Aspects 1 to 3,
having a fracture toughness value of 5.0 mPa·m^{1/2} or more and
having a bending strength of 480 MPa or more.

### <Aspect 5>

The ceramic sintered body according to any one of Aspects 1 to 3,
having a fracture toughness value of 5.5 mPa·m^{1/2} or more and
having a bending strength of 500 MPa or more.

### <Aspect 6>

The ceramic sintered body according to any one of Aspects 1 to 5, wherein
when an abrasive wear test is performed on the ceramic sintered body, the wear amount of the ceramic sintered body per unit amount of input particles is 0.5 mm³/kg or less.

### <Aspect 7>

A ceramic sintered body, containing a first compound and a second compound,
wherein
the first compound is silicon carbide,
the second compound is a diboride of a Group 4 element, which is represented by Ti₁₋ₓZrₓB₂ (0 ≤ x ≤ 0.05),
a ratio of the second compound in the ceramic sintered body is 50% by mass or more and 70% by mass or less,
the ceramic sintered body has a fracture toughness value of 5.0 mPa·m^{1/2} or more,
the ceramic sintered body has a bending strength of 500 MPa or more, and
when an abrasive wear test is performed on the ceramic sintered body, the wear amount of the ceramic sintered body per unit amount of input particles is 0.5 mm³/kg or less.

### EFFECTS OF INVENTION

In the ceramic sintered body of the present disclosure, high toughness and wear resistance are both achieved.

### BRIEF DESCRIPTION OF DRAWINGS

FIG. 1 is a schematic drawing that illustrates one example of a ceramic sintered body.
FIG. 2A is a schematic drawing for describing the propagation of cracks in a ceramic sintered body having a low coefficient of variation CV.
FIG. 2B is a schematic drawing for describing the propagation of cracks in a ceramic sintered body having a coefficient of variation CV in a prescribed range.
FIG. 2C is a schematic drawing for describing the propagation of cracks in a ceramic sintered body having a high coefficient of variation CV.
FIG. 3 is a schematic drawing for describing an abrasion test apparatus.

### DESCRIPTION OF EMBODIMENTS

Ceramic sintered bodies according to embodiments will now be described with reference to the drawings. However, the ceramic sintered body of the present disclosure is not limited to the below-described embodiments.

### 1. Ceramic Sintered Body

The ceramic sintered body of the present disclosure contains a first compound and a second compound. The first compound is silicon carbide. The second compound is a diboride of a Group 4 element. A ratio of the second compound in the ceramic sintered body is 50% by mass to 70% by mass. When a 300 µm × 300 µm region of a polished surface of the ceramic sintered body is divided into 400 sections of 15 µm × 15 µm and an area ratio of the first compound is specified for each of the sections, a coefficient of variation CV of the area ratio of the first compound is more than 0.14 but less than 0.23.

### 1.1 First Compound

The ceramic sintered body of the present disclosure contains silicon carbide as the first compound. The ratio of the first compound in the ceramic sintered body depends on the ratio of the second compound described below. The ratio of the first compound in the ceramic sintered body may be, for example, 30% by mass to 50% by mass, 32% by mass to 48% by mass, or 34% by mass to 46% by mass. These lower limit values and upper limit values may be arbitrarily combined.

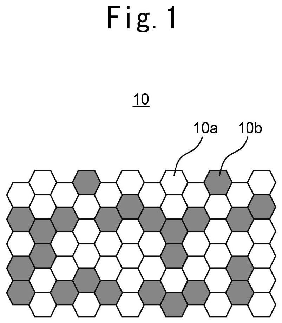

In the ceramic sintered body of the present disclosure, the form of the first compound is not particularly limited. For example, as illustrated in FIG. 1, a ceramic sintered body 10 has a first phase 10a formed of the first compound. The size and the shape of this first phase 10a are not particularly limited. The first phase 10a may be formed of crystal grains of the first compound. When the first phase 10a is composed of a single crystal grain, the diameter of the crystal grain (circle equivalent diameter at a cross section) may be, for example, 1 µm to 10 µm, or 2 µm to 5 µm. These lower limit values and upper limit values may be arbitrarily combined. A crystal grain may be formed of a single crystallite, or may be a single grain formed by plural crystallites. It is noted here that, even when a crystal grain of the first compound and a crystal grain of the second compound described below are each a single grain formed by plural crystallites, a crack is believed to propagate between the crystal grain of the first compound and the crystal grain of the second compound.

In the ceramic sintered body of the present disclosure, the first compound is unevenly distributed to a certain extent such that its area ratio has a coefficient of variation CV in a prescribed range. The details of the coefficient of variation CV will be described below.

### 1.2 Second Compound

The ceramic sintered body of the present disclosure contains a diboride of a Group 4 element as the second compound. The Group 4 element (titanium group element) is at least one of titanium, zirconium, or hafnium. In other words, the second compound may be a diboride of titanium, a diboride of zirconium, a diboride of hafnium, a composite diboride of titanium and zirconium, a composite diboride of titanium and hafnium, a composite diboride of zirconium and hafnium, or a composite diboride of titanium, zirconium, and hafnium. According to the findings of the present inventors, when the second compound is a titanium-containing diboride, the ceramic sintered body is likely to exhibit both superior toughness and superior wear resistance. Particularly, when the second compound is represented by Ti₁₋ₓZrₓB₂ (0 ≤ x ≤ 0.05), a marked improvement effect can be expected for the toughness and the wear resistance.

The ratio of the second compound in the ceramic sintered body is 50% by mass to 70% by mass. When the ratio of the second compound in the ceramic sintered body is excessively low, the ceramic sintered body is likely to be poor in both toughness and wear resistance. On the other hand, when the ratio of the second compound in the ceramic sintered body is excessively high, the ceramic sintered body is likely to be poor in wear resistance. Further, the ratio of the second compound in the ceramic sintered body also affects other mechanical properties of the ceramic sintered body, such as bending strength. According to the findings of the present inventors, when the ratio of the second compound in the ceramic sintered body is 50% by mass to 70% by mass, the ceramic sintered body is likely to not only achieve both high toughness and wear resistance, but also have excellent bending strength and the like. The ratio of the second compound in the ceramic sintered body may be 52% by mass to 68% by mass, or 54% by mass to 66% by mass. These lower limit values and upper limit values may be arbitrarily combined.

In the ceramic sintered body of the present disclosure, the form of the second compound is not particularly limited. For example, as illustrated in FIG. 1, the ceramic sintered body 10 has a second phase 10b formed of the second compound. The size and the shape of this second phase 10b are not particularly limited. The second phase 10b may be formed of crystal grains of the second compound. When the second phase 10b is composed of a single crystal grain, the diameter of the crystal grain (circle equivalent diameter at a cross section) may be, for example, 1 µm to 10 µm, or 2 µm to 5 µm. These lower limit values and upper limit values may be arbitrarily combined. A crystal grain may be formed of a single crystallite, or may be a single grain formed by plural crystallites.

### 1.3 Other Components

The ceramic sintered body of the present disclosure may contain other components in addition to the first and the second compounds. Examples of the other components include: components derived from impurities that are contained in raw materials; components derived from impurities that are mixed in during the production process; and components that mainly constitute a grain boundary phase derived from a sintering aid or the like (e.g., carbides other than the first compound, and borides other than the second compound). Specifically, the other components may include at least one selected from carbides of Group 4 elements and boron carbide. The smaller the amount of the other components, the more preferred it is. For example, a total ratio of the first and the second compounds in the ceramic sintered body may be 90% by mass to 100% by mass, 95% by mass to 100% by mass, or 99% by mass to 100% by mass. These lower limit values and upper limit values may be arbitrarily combined.

### 1.4 Coefficient of Variation CV

It is believed that the higher the fracture toughness value of the ceramic sintered body, which indicates the difficulty of crack propagation, the more inhibited is the fracture during wear and the further improved is the wear resistance. Examples of a method for improving the fracture toughness value of the ceramic sintered body include: (1) allowing columnar particles to develop; and (2) forming a composite of two or more kinds of materials to provide a stress field in which cracks hardly propagate, or to bend the propagation paths. With regard to (1), it is a method used for specific materials that are dissolved and reprecipitated during the sintering process, which method is mainly used for Si₃N₄-based materials. In the ceramic sintered body of the present disclosure, the fracture toughness value is improved by the method of (2). In other words, the crack propagation is inhibited and an improvement in toughness is achieved by a residual stress that is generated utilizing a difference in thermal expansion between two materials when the room temperature is restored from a high temperature in sintering.

As indicated in PTL 1, the fracture toughness value of a ceramic sintered body can be further improved by increasing the segregation of mixed different kinds of materials and thereby generating a larger residual stress field. However, according to the findings of the present inventors, the presence of such a large uneven distribution can be a major defect that acts as an origin of fracture. For example, an initial crack exists between different kinds of materials due to a large residual stress. In brittle materials such as ceramics, the smaller the initial defect and the larger the fracture toughness value, the higher the strength becomes. However, the fracture toughness value is merely an index of the difficulty of crack propagation and, when the initial defect is large, even a relatively small stress leads to fracture. According to the findings of the present inventors, in a ceramic sintered body, even when the fracture toughness value is high, an excessive increase in the uneven distribution of two materials causes a major defect that acts as an origin of fracture, resulting in poor wear resistance.

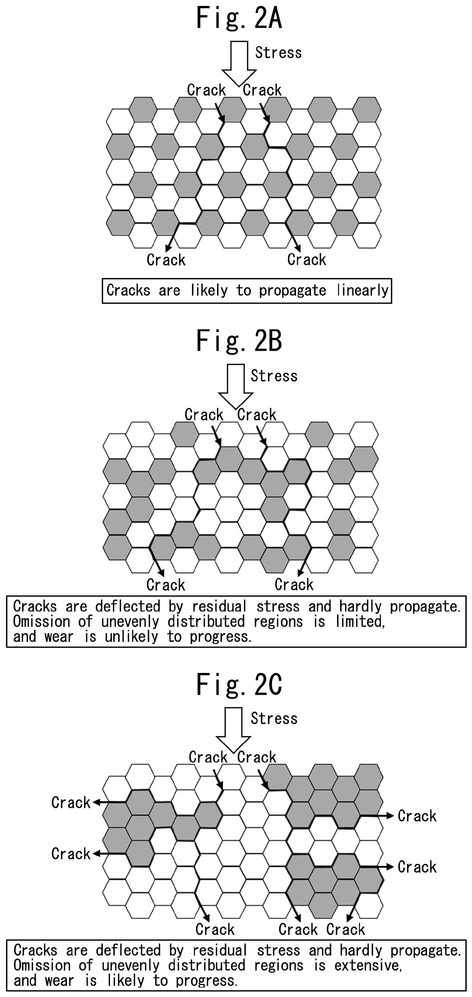

As described above, in a ceramic sintered body, by unevenly distributing two components (phases), the crack propagation inhibiting effect attributed to a residual stress can be obtained over a relatively large region, so that high toughness can be achieved. When the uneven distribution of the two components (phases) is limited (i.e., when the two components (phases) are uniformly dispersed), a crack in the ceramic sintered body is likely to propagate linearly, resulting in poor toughness (FIG. 2A). On the other hand, if the two components (phases) are excessively unevenly distributed, the peeling area is likely to be large when the ceramic sintered body is worn, resulting in an increase in the wear volume and deterioration of the wear resistance (FIG. 2C). In other words, in a ceramic sintered body, high toughness and wear resistance can both be obtained at the same time by achieving an appropriate degree of uneven distribution of the two components (phases) (FIG. 2B).

From the above-described standpoint, in the ceramic sintered body of the present disclosure, when a 300 µm × 300 µm region of a polished surface of the ceramic sintered body is divided into 400 sections of 15 µm × 15 µm and the area ratio of the first compound is specified for each of the sections, the coefficient of variation CV of the area ratio of the first compound is more than 0.14 but less than 0.23, whereby high toughness and wear resistance can both be achieved (FIG. 2B). An excessively low coefficient of variation CV is likely to cause cracks to propagate linearly (FIG. 2A). Further, an excessively high coefficient of variation CV is likely to increase the wear volume (FIG. 2C). Particularly, when the coefficient of variation CV is 0.15 to 0.20, superior toughness and wear resistance are obtained.

The coefficient of variation CV for the area ratio of the first compound can be determined by obtaining the element distribution on a polished surface of the ceramic sintered body using SEM-EDS, EPMA, or the like. For example, a mapping image of the element distribution on the polished surface can be measured by SEM-EDS, and the area fraction can be determined using an image analysis software. A 300 µm × 300 µm region of the thus obtained observation image is divided into 400 (20 × 20) sections of 15 µm × 15 µm, and the area fraction of silicon carbide, which is the first compound, is determined for each of the sections. Based on the area fraction determined for each of the sections, the standard deviation and the average value (arithmetic mean value) of the area fraction are obtained, and the coefficient of variation CV can be calculated by dividing the standard deviation by the average value. When the area of the polished surface of the sintered body is less than 10 mm², it is sufficient to determine the coefficient of variation CV for a single region on the polished surface, and it is verified whether or not the coefficient of variation CV of the single region is more than 0.14 but less than 0.23. Meanwhile, when an area of 10 mm² or more can be secured as the polished surface of the sintered body, the coefficient of variation CV is calculated for each of 10 regions in which the distance between the center points of the respective regions is 1 mm or more, and it is verified whether or not the coefficient of variation CV of each region is more than 0.14 but less than 0.23. The ceramic sintered body of the present disclosure has a coefficient of variation CV of more than 0.14 but less than 0.23 for all of the 10 regions.

### 1.5 Other

As described above, the ceramic sintered body of the present disclosure achieves both high toughness and high wear resistance by containing the first compound and a prescribed amount of the second compound, and satisfying the above-described coefficient of variation CV. The ceramic sintered body of the present disclosure may have, for example, the following mechanical properties.

### 1.5.1 Fracture Toughness Value (KIC)

The ceramic sintered body of the present disclosure may have a fracture toughness value of, for example, 5.0 mPa·m^{1/2} or more. Preferably, the ceramic sintered body of the present disclosure has a fracture toughness value of 5.5 mPa·m^{1/2} or more. An upper limit of the fracture toughness value is not particularly limited, and the higher the fracture toughness value, the more preferred it is. The ceramic sintered body of the present disclosure may also have a fracture toughness value of, for example, 6.0 mPa·m^{1/2} or less. The fracture toughness value is measured by the SEPB method according to JIS R1607.

### 1.5.2 Bending Strength

The ceramic sintered body of the present disclosure may have a bending strength of, for example, 480 MPa or more. Preferably, the ceramic sintered body of the present disclosure has a bending strength of 500 MPa or more. An upper limit of the bending strength is not particularly limited, and the higher the bending strength, the more preferred it is. The ceramic sintered body of the present disclosure may have a bending strength of, for example, 550 MPa or less. The bending strength is measured by the three-point bending test according to JIS R1601.

The ceramic sintered body according to one embodiment may have, for example, a fracture toughness value of 5.0 mPa·m^{1/2} or more and a bending strength of 480 MPa or more, a fracture toughness value of 5.5 mPa·m^{1/2} or more and a bending strength of 500 MPa or more, a fracture toughness value of 5.0 mPa·m^{1/2} to 6.0 mPa·m^{1/2} and a bending strength of 480 MPa to 550 MPa, or a fracture toughness value of 5.5 mPa·m^{1/2} to 6.0 mPa·m^{1/2} and a bending strength of 500 MPa to 550 MPa.

### 1.5.3 Wear Resistance

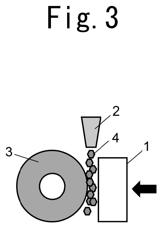

For example, when an abrasive wear test is performed on the ceramic sintered body of the present disclosure, the wear amount of the ceramic sintered body per unit amount of input particles may be 0.5 mm³/kg or less. The term "abrasive wear test" used herein refers to a test performed using the apparatus illustrated in FIG. 3. Specifically, a test piece 1 of 55 mm × 20 mm × 20 mm is cut out from the ceramic sintered body, and the entirety of a 55 mm × 20 mm test surface is ground using a grinding machine with #2000 diamond whetstone, after which the test piece is used for the test. In the apparatus illustrated in FIG. 3, using a wheel 3 on which nitrile rubber is adhered and which has a diameter of 224 mm and a width of 12 mm, silica sand No. 6 serving as abrasion particles 4 is fed from a projection nozzle 2 into a space between the test piece 1 and the wheel 3 at an input rate of 350 g/min while controlling the rotation speed of the wheel 3 and the pressing load of the test piece 1 to be 200 rpm and 130 N, respectively. The test is performed until the total input amount of the abrasion particles 4 reaches 21 kg. The weight of the test piece 1 is measured before and after the test, and the wear volume is calculated from the change in weight and the density determined by the Archimedes method, and then divided by the total weight of the input abrasion particles 4 to calculate the wear amount (mm³/kg) of the ceramic sintered body per unit amount of input particles (1 kg of input particles) . It is noted here that, immediately before the weight measurement, the test piece 1 is ultrasonically cleaned in acetone to remove particles and dust remaining on the surface of the test piece 1. Conditions other than those described above comply with ASTM G65.

### 1.5.4 Vickers Hardness

The ceramic sintered body of the present disclosure may have a Vickers hardness of, for example, 2,000 to 2,500. The Vickers hardness is measured at an indentation load of 98 N in accordance with JIS R1610, using the ceramic sintered body that is mirror-polished.

### 1.5.5 Density

The ceramic sintered body of the present disclosure may have a density of, for example, 3.5 g/cm³ to 5.0 g/cm³. However, the density of the ceramic sintered body may vary depending on the type of the second compound and the like. Further, the ceramic sintered body of the present disclosure may have a relative density of, for example, 97% or more. The density is measured by the Archimedes method.

### 2. Method of Producing Ceramic Sintered Body

The ceramic sintered body of the present disclosure can be produced by, for example, the below-described method. In other words, a method of producing the ceramic sintered body according to one embodiment includes: kneading a powder of the first compound, a powder of the second compound, and optionally a sintering aid (auxiliary raw material) and other raw materials to obtain a granulated body; and molding, degreasing, and firing the granulated body.

### 2.1 Powder of First Compound and Powder of Second Compound

The powder of the first compound and the powder of the second compound may each be produced by any known method. The particle size of each powder is not particularly limited, and may be selected as appropriate in accordance with the desired performance and the like. The powder of the first compound may have an average particle size of, for example, 10 nm to 5 µm. The powder of the second compound may have an average particle size of, for example, 500 nm to 5 µm. The powder of the first compound and the powder of the second compound may each be used singly, or in combination of two or more kinds thereof. The average particle size means a particle size (D50, median diameter) at a cumulative value of 50% in a volume-based particle size distribution determined by a laser diffraction-scattering method. The average particle size is measured using a laser diffraction-type particle size distribution analyzer LA-960 manufactured by Horiba Ltd., and the results of the measurement performed with an addition of sodium hexametaphosphate as a dispersant to a pure water solvent are adopted.

### 2.2 Auxiliary Raw Material

The above-described powders may be difficult to sinter. Therefore, in the production method according to one embodiment, a sintering aid as an auxiliary raw material may be mixed with the above-described powders. The type of the sintering aid used as an auxiliary raw material is not particularly limited. For example, the sintering aid may be at least one of carbon such as carbon black, or a carbide such as boron carbide.

### 2.3 Other Raw Materials

In the production method according to one embodiment, other raw materials that can become the first compound or the second compound after firing may be mixed along with the above-described powders. For example, by incorporating a carbide of a Group 4 element (e.g., a carbide of a Group 4 element different from the Group 4 element constituting the second compound) along with the above-described powders, the powder of the second compound is allowed to react with the carbide of the Group 4 element during firing. As a result, for example, a composite diboride containing plural kinds of Group 4 elements can be obtained as the second compound.

### 2.4 Kneading and Granulation of Powders

The above-described powders and the like are kneaded to obtain a granulated body. The mixing ratio of the above-described powders, auxiliary raw material, and other raw materials may be determined as appropriate in accordance with the performance of the desired ceramic sintered body. In other words, these materials are mixed in such a ratio that the content of the second compound in the eventually obtained ceramic sintered body is 50% by mass to 70% by mass. Further, a method of kneading and granulating the above-described powders, auxiliary raw material, and other raw materials is not particularly limited. For example, the above-described powders, auxiliary raw material, and other raw materials are mechanically mixed along with a binder, a dispersant, and a solvent to obtain a slurry, and this slurry is subsequently dried by spray drying or the like to obtain the desired granulated body. In this case, the types of the binder, dispersant, and solvent are not particularly limited. The size and the like of the granulated body are also not particularly limited.

When the dispersant is added in a small amount, raw material powders of the same type aggregate with each other to cause an increase in the above-described coefficient of variation CV, whereas when the dispersant is added in a large amount, the raw material powders are uniformly dispersed to cause a decrease in the coefficient of variation CV. The effect on the dispersion state of the raw material powders varies depending on the type of the dispersant. The type and the amount of the dispersant are preferably determined such that the desired coefficient of variation CV and the like are eventually obtained. Further, when the mixing time of mechanically mixing (kneading) the raw material powders and the auxiliary raw material is extended, the raw material powders are disintegrated and disaggregated, resulting in a decrease in the above-described coefficient of variation CV, whereas when the mixing time is shortened, the disintegration of the raw material powders does not proceed and the raw material powders of the same type remain in an aggregated state, as a result of which the coefficient of variation CV tends to be increased. The mixing means and the mixing time are preferably determined such that the desired coefficient of variation CV and the like are eventually obtained. As described above, the coefficient of variation CV can be controlled in a desired range by controlling the uneven distribution of the raw material powders through adjustment of the type and the amount of the dispersant to be added, as well as the mixing conditions and the like.

### 2.5 Molding and Firing of Granulated Body

The above-described granulated body is molded before being fired. The granulated body may be molded by any known molding means. An appropriate molding means may be selected in accordance with the shape and the like of the desired ceramic sintered body. For example, the granulated body may be filled into a mold and press-molded, or may be press-molded by CIP or the like, or these methods may be combined.

As described above, the coefficient of variation CV for the content of the second compound and the area ratio of the first compound, which are the requirements of the ceramic sintered body of the present disclosure, can be achieved by controlling the mixing conditions and the like of the raw material powders. In other words, the requirements of the ceramic sintered body of the present disclosure are satisfied regardless of the firing conditions. In this respect, the firing conditions may be any conditions as long as the above-described raw material powders and auxiliary raw material can be appropriately sintered. The heating rate and the maximum temperature during the firing, as well as the retention time at the maximum temperature, the cooling rate, and the like may be optimally selected based on the types of the above-described powders, auxiliary raw material, and other raw materials, and optimal conditions can be selected in accordance with the mechanical properties of the ceramic sintered body to be eventually obtained. The firing may be performed multiple times, and HIP may be performed as well.

### 3. Use

As described above, in the ceramic sintered body of the present disclosure, a prescribed amount of the second compound is contained along with the first compound, and the coefficient of variation CV for the first compound is in a prescribed range, whereby both high toughness and wear resistance are achieved. For example, when the ceramic sintered body of the present disclosure is applied as a member exposed to sliding wear, such as a positioning guide roll for passing a steel plate or a chute liner in a blast furnace top hopper, the wear rate is reduced, so that the repair cycle of the member can be extended.

### 4. Supplementary Note

The ceramic sintered body of the present disclosure may also have the following configuration. In this case as well, both high toughness and wear resistance are achieved. In other words, the ceramic sintered body according to one embodiment may be a ceramic sintered body containing a first compound and a second compound, in which the first compound is silicon carbide; the second compound is a diboride of a Group 4 element, which is represented by Ti₁₋ₓZrₓB₂ (0 ≤ x ≤ 0.05); a ratio of the second compound in the ceramic sintered body is 50% by mass to 70% by mass; the ceramic sintered body has a fracture toughness value of 5.0 mPa·m^{1/2} or more and a bending strength of 500 MPa or more; and, when an abrasive wear test is performed on the ceramic sintered body, the wear amount of the ceramic sintered body per unit amount of input particles is 0.5 mm³/kg or less. The details of each configuration are as described above.

### EXAMPLES

The present invention will now be described in more detail by way of Examples; however, the present invention is not limited to the below-described Examples. The present invention can adopt various conditions without departing from the gist of the present invention, as long as the object of the present invention is achieved.

### 1. Production of Ceramic Sintered Bodies for Evaluation

### 1.1 Examples 1 to 8 and Comparative Examples 1 and 2

A slurry was obtained by mixing a SiC powder (α-type, average particle size: 0.7 µm), a TiB₂ powder (average particle size: 2 µm), a ZrB₂ powder (average particle size: 2 µm), and a ZrC powder (average particle size: 2 µm) along with a sintering aid, distilled water, a dispersant, and a binder for 10 hours using a rolling ball mill such that the composition shown in Table 1 below was obtained. The thus obtained slurry was air-dried by spray drying to obtain a granulated body.

In this process, a polyacrylic acid-based dispersant was used as the dispersant, and the amount of the added dispersant was 1% by mass with respect to the total amount of the above-described raw material powders. The amount of the added distilled water was 80% by mass with respect to the total amount of the raw material powders. Further, as the sintering aid, 1% by mass of carbon powder (carbon black, average particle size: 0.05 µm) and boron carbide powder (average particle size: 0.8 µm) were added with respect to the total amount of the raw material powders.

The thus obtained granulated body was molded at a uniaxial pressure of 10 MPa, subsequently placed in a rubber container, and then CIP-molded at 140 MPa to obtain a molded body. The thus obtained molded body was degreased in an Ar atmosphere, subsequently maintained at 2,150°C in an Ar atmosphere for 8 hours, and then fired at normal pressure to obtain an intermediate sintered body. This intermediate sintered body was HIP-treated at 2,000°C for 3 hours under an Ar gas pressure of 198 MPa, whereby a ceramic sintered body for evaluation was obtained.

### 1.2 Comparative Examples 3 to 6

A slurry was obtained by mixing the same raw material powders as in Examples 1 to 8 and Comparative Examples 1 and 2, along with a sintering aid, distilled water, a dispersant, and a binder for 10 hours using a rolling ball mill such that the composition shown in Table 1 below was obtained. The thus obtained slurry was air-dried by spray drying to obtain a granulated body.

In this process, a polyacrylic acid-based dispersant was used as the dispersant, and the amount of the added dispersant was 0.5% by mass in Comparative Examples 3 and 4, and 0.2% by mass in Comparative Examples 5 and 6, with respect to the total amount of the above-described raw material powders. The amount of the added distilled water, as well as the type and the amount of the added sintering aid, are the same as described above. When the dispersant is added in a small amount, the raw material powders of the same type aggregate with each other to increase the uneven distribution of each phase in the ceramic sintered body. In other words, the smaller the amount of the dispersant, the higher the below-described coefficient of variation CV.

The thus obtained granulated body was molded, degreased, fired, and HIP-treated in the same manner as in Examples 1 to 8 and Comparative Examples 1 and 2, whereby a ceramic sintered body for evaluation was obtained.

### 1.3 Example 9 and Comparative Example 7

A mixed powder was obtained by mixing 200 g of raw material powders having the composition shown in Table 1 below with 300 ml of an organic solvent using a planetary ball mill, and subsequently drying the resultant in a draft to evaporate the organic solvent. The thus obtained mixed powder was molded, fired, and HIP-treated in the same manner as in Examples 1 to 8 and Comparative Examples 1 and 2, whereby a ceramic sintered body for evaluation was obtained. In Example 9 and Comparative Example 7, as the sintering aid, 1% by mass of carbon powder (carbon black, average particle size: 0.05 µm) and boron carbide powder (average particle size: 0.8 µm) were added with respect to the total amount of the raw material powders at the time of the mixing using the planetary ball mill.

It is noted here that the time of the mixing using the planetary ball mill was 6 hours in Example 9 and 12 hours in Comparative Example 7. When the mixing time is long, disintegration of the raw material powders proceeds, resulting in a sintered body in which each phase is uniformly dispersed. In other words, the longer the mixing time, the lower the below-described coefficient of variation CV.

### 2. Evaluation of Ceramic Sintered Bodies

For each ceramic sintered body, the density, the relative density, the bending strength, the fracture toughness value (KIC), and the Vickers hardness were measured. In addition, an abrasion test was performed on each ceramic sintered body to measure the wear amount of the ceramic sintered body per unit amount of input particles (1 kg). A 300 µm × 300 µm region of a polished surface of the ceramic sintered body was divided into 400 sections of 15 µm × 15 µm, the area ratio of silicon carbide was specified for each of the sections by SEM-EDS, and the coefficient of variation CV of the area ratio of silicon carbide was determined. The details of each measurement method are as described above in the section of DESCRIPTION OF EMBODIMENTS. The measurement results are shown in Table 1 below.

**[Table 1]**

| | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|---|---|
| First compound: SiC [% by mass] | 45.4 | 44.9 | 45.4 | 49.5 | 33.5 | 35.5 | 36.7 | 41.0 | 45.4 | 62.3 | 23.3 | 35.5 | 39.5 | 49.5 | 46.9 | 49.5 |
| Second compound: TiB₂ [% by mass] | 54.6 | 51.6 | 54.6 | 50.5 | 63.1 mass] | | 63.3 | 55.6 | 54.6 | **37.7** | **76.7** | | 60.5 | 50.5 | 49.6 | 50.5 |
| Second compound: ZrB2 [% by mass] | | | | | | 64.5 | | | | | | 64.5 | | | | |
| Other: ZrC [% by mass] | | 3.5 | | | 3.4 | | | 3.4 | | | | | | | 3.5 | |
| Total [% by mass] | 100 | 100 | 100 | 100 | 100 | 100 | 100 | 100 | 100 | 100 | 100 | 100 | 100 | 100 | 100 | 100 |
| Coefficient of variation CV | 0.158 | 0.158 | 0.151 | 0.163 | 0.197 | 0.190 | 0.183 | 0.224 | 0.146 | 0.168 | 0.188 | **0.242** | **0.257** | **0.394** | **0.289** | **0.125** |
| KIC [Pa·m^{1/2}] | 5.9 | 5.6 | 5.5 | 5.2 | 5.7 | 5.4 | 5.8 | 5.9 | 4.7 | 4.6 | 5.6 | 5.7 | 5.9 | 6.0 | 6.0 | 4.2 |
| Bending strength [MPa] | 522 | 542 | 528 | 532 | 525 | 504 | 509 | 496 | 629 | 574 | 442 | 475 | 450 | 341 | 435 | 521 |
| Wear amount [mm³/kg] | 0.35 | 0.32 | 0.45 | 0.47 | 0.40 | 0.49 | 0.42 | 0.52 | 0.51 | 0.55 | 0.60 | 0.56 | 0.60 | 0.70 | 0.62 | 0.57 |
| Vickers hardness | 2,254 | 2,399 | 2,060 | 2,252 | 2,331 | 2,156 | 2,303 | 2,338 | 2,368 | 2,414 | 2,652 | 2,225 | 2,367 | 2,231 | 2,376 | 2,423 |
| Density [g/cm³] | 3.742 | 3.749 | 3.644 | 3.651 | 3.921 | 4.398 | 3.827 | 3.806 | 3.749 | 3.517 | 4.033 | 4.389 | 3.805 | 3.647 | 3.728 | 3.677 |
| Relative density [%] | 99.6 | 98.7 | 97.0 | 98.5 | 99.3 | 99.4 | 98.9 | 99.8 | 98.9 | 99.4 | 99.2 | 99.3 | 98.4 | 98.8 | 98.8 | 99.2 |

The results shown in Table 1 reveal the following.

The ceramic sintered body according to Comparative Example 1 has a low content of the second compound (a diboride of a Group 4 element). Therefore, the toughness and the wear resistance were both insufficient.

The ceramic sintered body according to Comparative Example 2 has a high content of the second compound (a diboride of a Group 4 element). Therefore, although toughness was ensured, the peeling area was large when the ceramic sintered body was worn, resulting in insufficient wear resistance.

The ceramic sintered bodies according to Comparative Examples 3 to 6 have a high coefficient of variation CV for the area ratio of the first compound (silicon carbide), and the first compound is in the state of being excessively unevenly distributed. Therefore, a crack propagation inhibiting effect was provided by a residual stress generated by the uneven distribution of two materials, and toughness was thus ensured; however, the peeling area was large when each ceramic sintered body was worn, resulting in insufficient wear resistance (see FIG. 2C).

The ceramic sintered body according to Comparative Example 7 has a low coefficient of variation CV for the area ratio of the first compound (silicon carbide), and the first compound is in the state of being uniformly dispersed. Therefore, the crack propagation inhibiting effect attributed to a residual stress was not obtained, and the toughness and the wear resistance were both insufficient (see FIG. 2A).

On the other hand, in the ceramic sintered bodies according to Examples 1 to 9, the content of the second compound (a diboride of a Group 4 element) was in a prescribed range, and the coefficient of variation CV for the area ratio of the first compound (silicon carbide) was in a prescribed range; therefore, these ceramic sintered bodies not only had high toughness because of the crack propagation inhibiting effect attributed to a residual stress, but also had a small peeling area when worn, exhibiting excellent wear resistance (see FIG. 2B).

As demonstrated in Examples 1 to 9, the same effects are exerted in both cases where the second compound is TiB₂ and ZrB₂. It is believed that the same effects are also exerted with a diboride of Hf (hafnium) belonging to the same group as Ti and Zr in the periodic table. In other words, it can be said that the desired effects are exerted as long as the second compound is a diboride of a Group 4 element.

Further, ZrC used as the other component in Table 1 is believed to constitute Ti₁₋ₓZrₓB₂ serving as the second compound in the ceramic sintered bodies. In other words, from the results shown in Examples 1 to 9, it can be said that excellent effects are exerted when Ti₁₋ₓZrₓB₂ (0 x 0.05) is used as the second compound.

As described above, a ceramic sintered body that contains a first compound and a second compound and satisfies the following requirements A to D is said to achieve both high toughness and wear resistance:
Requirement A: The first compound is silicon carbide.
Requirement B: The second compound is a diboride of a Group 4 element.
Requirement C: The ratio of the second compound in the ceramic sintered body is 50% by mass to 70% by mass.
Requirement D: When a 300 µm × 300 µm region of a polished surface of the ceramic sintered body is divided into 400 sections of 15 µm × 15 µm and an area ratio of the first compound is specified for each of the sections, the coefficient of variation CV of the area ratio of the first compound is more than 0.14 but less than 0.23.

Further, from the above-described results, it is seen that, under the conditions where the first compound is silicon carbide, the second compound is a diboride of a Group 4 element, which is represented by Ti₁₋ₓZrₓB₂ (0 ≤ x ≤ 0.05), and the ratio of the second compound in the ceramic sintered body is 50% by mass to 70% by mass, a sintered body having not only a fracture toughness value of 5.0 mPa·m^{1/2} or more but also a bending strength of 500 MPa or more is obtained by controlling the CV value to be 0.15 to 0.20, and that the wear amount of the ceramic sintered body per unit amount of input particles in an abrasive wear test is 0.5 mm³/kg or less.

### REFERENCE SIGNS LIST

1: Test piece
2: Projection nozzle
3: Wheel
4: Abrasion particle
10: Ceramic sintered body
10a: First phase (silicon carbide)
10b: Second phase (diboride of Group 4 element)

## Claims

1. A ceramic sintered body, comprising a first compound and a second compound,
wherein
the first compound is silicon carbide,
the second compound is a diboride of a Group 4 element,
a ratio of the second compound in the ceramic sintered body is 50% by mass or more and 70% by mass or less, and
when a 300 µm × 300 µm region of a polished surface of the ceramic sintered body is divided into 400 sections of 15 µm × 15 µm and an area ratio of the first compound is specified for each of the sections, a coefficient of variation CV of the area ratio of the first compound is more than 0.14 and less than 0.23.

2. The ceramic sintered body according to claim 1, wherein
the second compound is represented by Ti₁₋ₓZrₓB₂ (0 ≤ x ≤ 0.05).

3. The ceramic sintered body according to claim 1 or 2, wherein
the coefficient of variation CV is 0.15 or more and 0.20 or less.

4. The ceramic sintered body according to any one of claims 1 to 3,
having a fracture toughness value of 5.0 mPa·m^{1/2} or more and
having a bending strength of 480 MPa or more.

5. The ceramic sintered body according to any one of claims 1 to 3,
having a fracture toughness value of 5.5 mPa·m^{1/2} or more and
having a bending strength of 500 MPa or more.

6. The ceramic sintered body according to any one of claims 1 to 5, wherein
when an abrasive wear test is performed on the ceramic sintered body, the wear amount of the ceramic sintered body per unit amount of input particles is 0.5 mm³/kg or less.

7. A ceramic sintered body, comprising a first compound and a second compound,
wherein
the first compound is silicon carbide,
the second compound is a diboride of a Group 4 element, which is represented by Ti₁₋ₓZrₓB₂ (0 ≤ x ≤ 0.05),
a ratio of the second compound in the ceramic sintered body is 50% by mass or more and 70% by mass or less,
the ceramic sintered body has a fracture toughness value of 5.0 mPa·m^{1/2} or more,
the ceramic sintered body has a bending strength of 500 MPa or more, and
when an abrasive wear test is performed on the ceramic sintered body, the wear amount of the ceramic sintered body per unit amount of input particles is 0.5 mm³/kg or less.
